# EUROPEAN PATENT APPLICATION

(11) **EP 1 990 967 A1**
(43) Date of publication of application: **12.11.2008**
(21) Application number: 06791043.0
(22) Date of filing: 19.09.2006
(51) Int. Cl.: H04L 29/06, H04Q 7/20, H04L 12/28

(54) **A METHOD, AN APPARATUS AND A WIRELESS LOCAL AREA NETWORK FOR ESTABLISHING THE VIRTUAL LINK AND A DATA TRANSFERRING METHOD**

(30) Priority: 10.02.2006 CN 200610033601
(71) Applicant: Huawei Technologies Co., Ltd., Shenzhen, Guangdong Province 518129 (CN)
(72) Inventor: YAO, Zhonghui, Guang Dong Province 518129 (CN)
(74) Representative: Pfenning, Meinig & Partner GbR
(86) International application number: PCT/CN2006/002451
(87) International publication number: WO 2007/090321

(57) **Abstract**

A method for establishing the virtual link includes the following steps: an end requesting to establish the virtual link sends a virtual link establishing request message to a requested end through a basic link, and the content of the request message comprises the virtual link negotiation parameters of the requesting end; once the requested end receives the virtual link establishing request message, it performs the negotiation using the virtual link parameters of the requesting end obtained by analyzing and the virtual link negotiation parameters of the requested end itself, to get the virtual link parameters after negotiation; the requested end determines the virtual link end-point address identifier; the requested end sends the virtual link establishing response to the requesting end through the basic link and the response content includes the virtual link parameters after negotiation in step B and the virtual link end-point address identifier; after the requesting end receiving the response, it obtains the virtual link parameters after negotiation and the virtual link end-point address identifier by analyzing, and the requesting end and the requested end achieve the virtual link identifier.

## Description

### Field of the present invention

The present invention relates to network communication field, and particularly to a method and an apparatus for establishing a Virtual Link (vLink) in a Wireless LAN (WLAN).

### Background of the present invention

Wireless LAN (WLAN) technique is favorable in the market for its wireless advantage, high access speed comparable to wired access, and low price. By now, replacing wired LANs, WLANs have been widely used in homes, campuses, hotels, and business office environments, and broadly deployed at public hot spots as a wireless broadband access technique to provide public wireless broadband data access service.

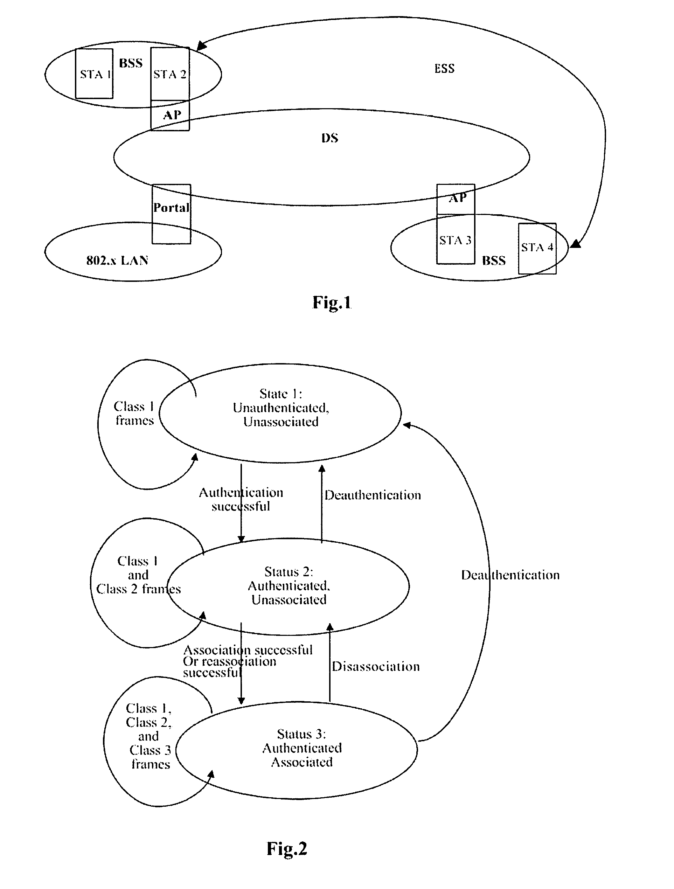

Fig.1 shows a WLAN system defined in IEEE 802.11. As shown in Fig.1, multiple Stations (STAs) access to an Access Point (AP) to constitute a wireless LAN. The STAs associated with the same AP constitute a Basic Service Set (BSS). Various APs or wired LANs (802.x LAN) can be connected to each other via a Distribution System (DS). In that way, a large LAN, referred to as an Extended Service Set (ESS), is constituted by a set of one or more interconnected BSSs through the wired LAN within the Distribution System.

A link between an STA and an AP may be represented with a pair of Media Access Control (MAC) addresses, i.e., the MAC address of the STA and that of the AP. In this application document, such a link is referred to as a base link. An AP and an STA communicate with each other through a base link, that is, the Transmitter Address (TA) and the Receiver Address (RA) in 802.11 MAC frame header are the End-point Addresses (EAs) of the base link.

Authentication and association negotiation between an STA and an AP are performed through a base link. Each STA maintains two state variables for the corresponding wireless communication media, which identify authentication state and association state respectively. One end of the WLAN wireless media maintains the state of the other end. As shown in Fig.2, the state of an STA is maintained in an AP. The initial state is State 1: unauthenticated and unassociated. When deciding to access the AP according to the Beacon Frame from the AP, the STA starts an 802.11 authentication process with the AP; after a successful authentication, the STA enters into State 2. In State 2, the STA initiates an association negotiation with the AP; after a successful association, the STA enters into State 3. Now, the correspondence between the STA and the AP is kept in the DS system as shown in Fig.1, so that the data packets sent from other sites in the system to the STA may be sent to the AP associated with the STA properly, and then forwarded to the STA by the AP.

For each STA, the types of 802.11 frames allowed to be transmitted are different in different state; in State 1, Class 1 frames are allowed to be transmitted; in State 2, Class 1 and Class 2 frames are allowed to be transmitted; and in State 3, Class 1, Class 2 and Class 3 frames are allowed to be transmitted. Class 1 frames refer to control frames and a portion of management frames; Class 2 frames refer to management frames other than those belonging to Class 1 frames; Class 3 frames refer to data frames and power save control frames.

Authentication and security mechanisms are required during a communication process between an STA and an AP. Since the authentication and security mechanisms provided in 802.11 cannot meet the security demand in practical applications, 802.11 i enhances its security mechanism. 802.11i specifies to adopt the Open System option of 802.11 as 802.11 authentication mechanism (the objective effect is equivalent to no authentication) and adopt 802.1X as the authentication and key management mechanisms, and supports AES encryption algorithm; the specific security mechanism is negotiated during the establishing of association. Therefore, for 802.11i, after the STA enters into State 3, only 802.1X packets can be transmitted via the uncontrolled 802.1X port through the link between the STA and the AP before an 802.1X authentication and key negotiation is accomplished; after the session key negotiation is accomplished successfully, other data packets may be encrypted and transmitted between the AP and the STA via the controlled 802.1X port.

As specified in IEEE 802.11 standard, only one link is allowed between an STA and an AP. All data packets and MAC-layer management and control packets are transmitted over the link. As a result, different traffic streams cannot be isolated logically on MAC layer. In addition, only the exclusive security mechanism (the security mechanism determined during the association process) bound to the link can be used. However, in practical applications, there may be concurrent traffic streams on a STA, and those concurrent traffic streams may require different security mechanisms and different QoS supports. It is difficult to meet such application demands with the existing mechanism.

### Summary of the present invention

The embodiments of the present invention aims to overcome the problem that only one link is allowed between an STA and an AP and thereby the demand for different security mechanisms cannot be met in the prior art. The embodiments of the present invention provide a method and an apparatus for establishing a virtual link, a wireless LAN and a method for transmitting data.

The method for establishing a virtual link according to an embodiment includes:
Step A: A virtual link establishment requesting end through a base link initiates a virtual link establishment request to a requested end; the request contains virtual link negotiation parameters of the requesting end;
Step B: Upon receiving the virtual link establishment request, the requested end negotiates between the parsed out virtual link negotiation parameters of the requesting end and local virtual link parameters of its own to obtain negotiated virtual link parameters;
Step C: The requested end determines the virtual link end-point address identifications;
Step D: The requested end sends a virtual link establishment response to the requesting end through the base link; the response contains the negotiated virtual link parameters obtained and the virtual link end-point address identifications;
Step E: Upon receiving the response, the requesting end parses the response and obtains the negotiated virtual link parameters and the virtual link end-point address identifications; and the identification of the virtual link is accomplished for the requesting end and the requested end.

Optionally, the virtual link establishment requesting end is a Station (STA), and the requested end is an Access Point (AP).

Optionally, the requested end determines the virtual link end-point address identifications through the following steps: when the virtual link establishment request initiated by the virtual link establishment requesting end to the requested end through the base link carries the virtual link end-point address identification of the requesting end, the requested end assigns the local virtual link end-point address identification of its own after parsing the request and obtaining the virtual link end-point address identification of the requesting end, and thereby obtains the virtual link end-point address identifications; or
when the virtual link establishment request initiated by the virtual link establishment requesting end to the requested end through the base link carries the virtual link end-point address identifications of the requesting end and the requested end, the requested end takes the parsed out virtual link end-point address identifications of the requesting end and the requested end as the end-point address identifications of the virtual link; or
when the virtual link end-point address identification information carried in the virtual link establishment request message initiated by the virtual link establishment requesting end to the requested end through the base link is empty, the requested end assigns the virtual link end-point address identifications for the requesting end and the requested end, and takes the assigned identifications as the end-point address identifications of the virtual link.

Optionally, the virtual link end-point address identifications comprise the end-point addresses of the requesting end and requested end, or, the virtual link end-point address identifications comprise end-point addresses of the base link and port numbers of the requesting end and requested end.

Optionally, the method further comprises: after the requested end sends the virtual link establishment response, assigning a local virtual link number by the requested end for itself; or, when the requesting end receives the virtual link establishment response sent from the requested end, assigning a local virtual link number by the requesting end for itself.

Optionally, the parameters comprise at least virtual link binding information, security parameters, and Quality of Service (QoS) parameters.

Optionally, there is disposed a counter at each end of the virtual link; when the virtual link is established, the counters are increased by 1, and when the virtual link is deleted, the counters are decreased by 1.

Optionally, the method further comprises: sending virtual link establishment capability information by the two ends waiting for virtual link establishment and determining by the two ends whether a virtual link may be established between them.

Optionally, the AP waiting for virtual link establishment sends the virtual link capability information in a Beacon Frame or a Probe Response Frame; the STA receives the virtual link capability information when it scans the channels and thereby determines whether a virtual link may be established between the AP and itself.

Optionally, the method further comprises: sending the virtual link capability information in an association request or the virtual link establishment request by the STA waiting for virtual link establishment; after the AP receives the virtual link capability information, judging by the AP whether a virtual link may be established between the STA and itself.

Optionally, the virtual link establishment capability information comprises whether the two ends waiting for virtual link establishment support multiple Media Access Control (MAC) addresses; or, the virtual link capability information comprises: whether the two ends support virtual link and virtual link end-point address assignation policy.

Optionally, when either end of the virtual link receives a virtual link deletion request, it sends a virtual link deletion message through the virtual link, and releases relevant local resources; when the other end of the virtual link receives the virtual link deletion message, it releases relevant resources.

The apparatus for establishing a virtual link according to another embodiment is adapted to establish the virtual link based on a base link, and includes a negotiation module and an end-point address identification setting module;
the negotiation module is adapted to create and initiate to the requested end a virtual link establishment request containing virtual link negotiation parameters; to receive and parse a request message from a requesting end, and negotiate between the obtained virtual link negotiation parameters and the local virtual link parameters to obtain negotiated virtual link parameters; and to determine a local virtual link end-point address identification and send a virtual link establishment response message which contains the negotiated virtual link parameters and the virtual link end-point address identifications to the requesting end;
the end-point address identification setting module is adapted to parse the received response message to obtain the negotiated virtual link parameters and the virtual link end-point address identifications.

The station (STA) according to another embodiment includes an apparatus for establishing a virtual link; the apparatus is adapted to establish the virtual link based on a base link, and includes a negotiation module and an end-point address identification setting module; wherein
the negotiation module is adapted to create and initiate to the requested end a virtual link establishment request containing virtual link negotiation parameters; to receive and parse a request message from a requesting end, and negotiate between the obtained virtual link negotiation parameters and the local virtual link parameters to obtain negotiated virtual link parameters; and to determine local virtual link end-point address identification and send a virtual link establishment response which contains the negotiated virtual link parameters and the virtual link end-point address identifications to the requesting end;
the end-point address identification setting module is adapted to parse the received response to obtain the negotiated virtual link parameters and the virtual link end-point address identifications.

The Access Point (AP) according to another embodiment includes an apparatus for establishing a virtual link; the apparatus is adapted to establish the virtual link based on a base link, and includes a negotiation module and an end-point address identification setting module; wherein
the negotiation module is adapted to create and initiate to the requested end a virtual link establishment request containing virtual link negotiation parameters; to receive and parse a request message from a requesting end, and negotiate between the obtained virtual link negotiation parameters and the local virtual link parameters to obtain negotiated virtual link parameters; and to determine local virtual link end-point address identification and send a virtual link establishment response which contains the negotiated virtual link parameters and the virtual link end-point address identifications to the requesting end;
the end-point address identification setting module is adapted to parse the received response to obtain the negotiated virtual link parameters and the virtual link end-point address identifications.

The WLAN according to another embodiment includes at least one Basis Service Set (BSS) connected to each other via a Distribution System (DS); each of the at least one BSS includes at least one Station (STA) associated with an Access Point (AP); the STA includes an apparatus for establishing a virtual link, and the AP includes an apparatus for establishing a virtual link; the apparatus for establishing a virtual link is adapted to establish the virtual link based on a base link, and includes a negotiation module and an end-point address identification setting module;
the negotiation module is adapted to create and initiate to the requested end a virtual link establishment request containing virtual link negotiation parameters; to parse a request message from a requesting end, and negotiate between the obtained virtual link negotiation parameters and the local virtual link parameters to obtain negotiated virtual link parameters; and to determine local virtual link end-point address identification and send a virtual link establishment response which contains the negotiated virtual link parameters and the virtual link end-point address identifications to the requesting end;
the end-point address identification setting module is adapted to parse the received response to obtain the negotiated virtual link parameters and the virtual link end-point address identifications.

The method for transmitting data through a Wireless LAN (WLAN) according to another embodiment includes the following:
Step E: A MAC user at a data transmission requesting end sends a data packet request to the local MAC layer; the request containing a MAC source address and a MAC destination address, a virtual link number, and the data packet to be sent.
Step F: After the MAC layer at the data transmission requesting end receives the request, the MAC layer determines a Transmitter Address (TA) and a Receiver Address (RA) according to the virtual link number, and then constructs an address field in MAC data frame header according to the TA, the RA, the source address and the destination address, and sends the data packet to the MAC layer at the requested end through the virtual link.
Step G: The MAC layer at the data transmission requested end sends a data packet indication carrying the MAC user source address, the MAC user destination address, the virtual link number, and the received data packet to the local MAC user at the requested end.

Optionally, as specified in 802.11 protocol and according to the security mechanism corresponding to the virtual link, the data packet is segmented and encrypted to construct one or a series of MAC protocol data packets, and sent to the data transmission requested end; the requested end decrypts the received one or a series of data packets and reconstructs the one or a series of segmented data packets.

Optionally, the method further includes: after sending the data packet, sending a data packet state indication by the MAC layer at the transmission data requesting end to the local MAC user; the indication containing the state, the source address, and the destination address of the data packet sent through the virtual link, as well as the virtual link number.

The embodiments of the present invention have the following benefits.

1. Since virtual links are provided in WLAN, for example, different virtual links may be established for different applications to provide different security and QoS levels, the embodiments of the present invention enhance the service capability of WLAN greatly.

2. Since the embodiments of the present invention supports initiating virtual link establishment from AP to associated STAs, they can provide better support for a variety of service applications in which virtual link establishment is initiated actively from the network side.

### Brief Description of the Drawings

Fig.1 shows the 802.11 network architecture in the prior art;

Fig.2 shows a schematic diagram of STA states;

Fig.3 shows a schematic diagram of the correspondence between one base link and multiple virtual links according to an embodiment of the present invention;

Fig.4 shows a schematic diagram of establishing virtual links between an STA and an AP according to an embodiment of the present invention;

Fig.5 shows a flow chart of virtual link establishment initiated by an STA according to an embodiment of the present invention;

Fig.6 shows a flow chart of virtual link establishment initiated by AP according to an embodiment of the present invention;

Fig.7 shows a flow chart of virtual link establishment according to an embodiment of the present invention;

Fig.8 shows a flow chart of data transmission by using a virtual link apparatus according to an embodiment of the present invention;

Fig.9 shows a flow chart of virtual link deletion according to an embodiment of the present invention; and

Fig.10 shows a flow chart of virtual link establishment by means of an association request according to an embodiment of the present invention.

### Detailed Description of the Embodiments

Some preferred embodiments of the present invention will be described in detail with reference to the accompanying drawings.

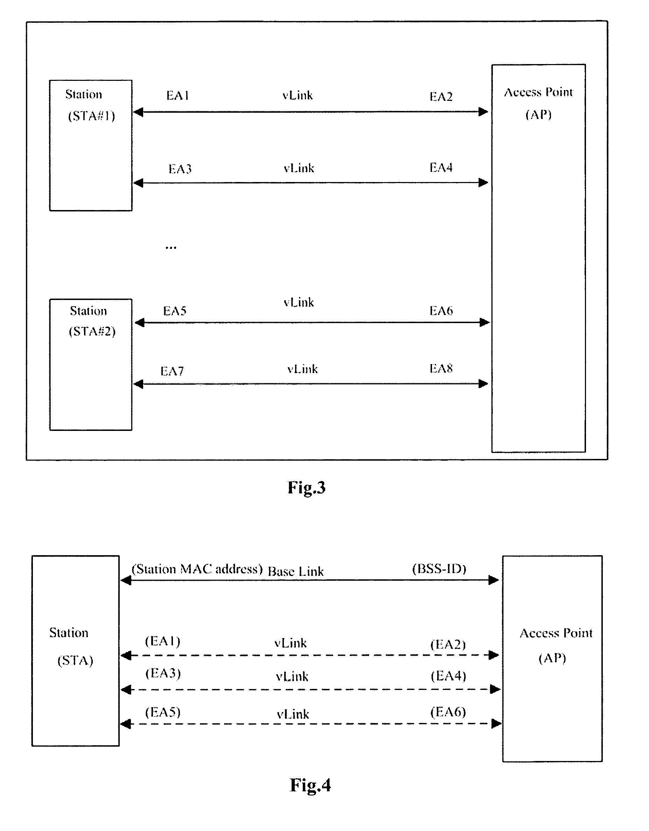

Fig.3 shows a first embodiment of establishing multiple virtual links between an STA and an AP in a WLAN. Before any virtual link is established, a link between STA#1 and the AP is determined by means of the MAC address of the AP (i.e., Basic Service Set IDentifier (BSSID)) and that of the STA #1, which, in contrast to the virtual link, is referred to as a base link in the embodiments of the present invention.

An embodiment of the present invention supports the scheme in which a single base link between an STA and an AP corresponds to multiple Virtual Links (vLinks). As shown in Fig.3, when the STA#1 is authenticated by the AP or an association is established between the STA#1 and the AP, multiple virtual links may be established between the STA#1 and the AP based on the base link; each virtual link is uniquely identified with STA End-point Address (EA) MAC address and AP EA MAC address. When to establish the association between the STA#1 and the AP, a correspondence between the AP address (i.e., BSSID) and the STA#1 MAC address is established in the DS first, and then an Association Identifier (AID) #1 is assigned. As shown in Fig.3, two virtual links are established for the association, which are identified with the corresponding STA EA1 MAC address and AP EA2 MAC address as well as STA EA3 MAC address and AP EA4 MAC address, respectively, as shown in Table 1.

**Table 1**

| AP | STA | Association Identifier | Virtual Link | |
|---|---|---|---|---|
| | | | STA MAC Address | AP MAC Address |
| BSSID | STA#1 MAC Address | AID#1 | EA1 | EA2 |
| | | | EA3 | EA4 |
| | STA#2 MAC Address | AID#2 | EA5 | EA6 |
| | | | EA7 | EA8 |

As shown in Fig.4, before any virtual link is established, the AP and the STA#1 communicates with each other through the base link, that is, the Transmitter Address (TA) and the Receiver Address (RA) in 802.11 MAC frame header are, for example, the corresponding AP MAC address (i.e., BSSID) and STA#1 MAC address, respectively. After a virtual link is established, the AP and the STA may communicate with each other over the virtual link. That is to say, the TA and the RA in 802.11MAC frame header are end-point addresses of the corresponding virtual link. The MAC addresses of the virtual link establishment requesting end and the virtual link establishment requested end may be STA EA MAC address or AP EA MAC address.

Due to the fact that different security mechanisms and QoS mechanisms may be established through negotiation when various virtual links are established, different virtual links may be established for services at different security levels or with different QoS requirements, so as to meet the specific demands of different services.

First, for an STA and an AP between which a virtual link is to be established, at least either of them has to support multiple MAC addresses at a single IEEE 802.11 wireless interface. Therefore, a virtual link capability identification bit and a multiple address capability identification bit may be set for the STA and the AP. In this embodiment, when sending a Beacon Frame or a Probe Response Frame, the AP shall extend the frame to carry the above virtual link capability information, multiple address capability information, and virtual link end-point address assignment policy, in order to facilitate the STA's determining whether a virtual link to the AP may be established practically when it scans the channels. When sending an association request, the STA shall also include the above virtual link capability information, multiple address capability information, and virtual link end-point address assignation policy into the association request, so that the AP may determine whether the STA supports virtual link and whether the STA has multi-address capability. That approach can ensure the STA or the AP knows whether a virtual link may be established with the opposite end before it sends a virtual link establishment request. As a result, after the above extension, devices with virtual link capability may communicate with devices without virtual link capability in the traditional mode. As shown in Table 2, the capability identification has direct influence on whether virtual link is supported and how to assign the end-point addresses of a virtual link (i.e., the characteristics of end-point address).

**Table 2**

| **AP** | **STA** | **Whether a virtual link may be established practically?** | **Characteristics of End-point Address** |
|---|---|---|---|
| Virtual link supported, Multiple addresses supported | Virtual link supported, Multiple addresses supported | Y | End-point Addresses of both ends may be assigned dynamically |
| Virtual link supported, Multiple addresses supported | Virtual link supported, Multiple addresses not supported | Y | For all Virtual links established to STA, the End-point Address at STA is fixed |
| Virtual link supported, Multiple addresses not supported | Virtual link supported, Multiple addresses supported | Y | For all Virtual links established to AP, the End-point Address at AP is fixed |
| Virtual link supported, Multiple addresses not supported | Virtual link supported, Multiple addresses not supported | Not supported | - |

When the STA state is "Authenticated" or "Associated", a virtual link may be created between an STA and an AP based on the base link. Virtual link establishment may be initiated by the STA or the AP.

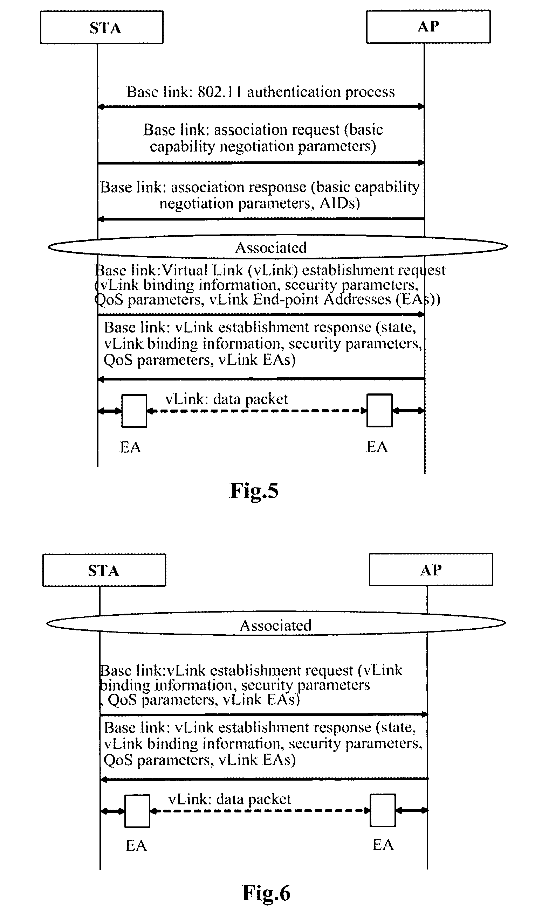

As shown in Fig.5, a virtual link establishment process initiated by an STA is as follows:

Step 101: The MAC user at STA sends a "Virtual Link Establishment Request" message to the local MAC layer; the request message includes:

(1) virtual link binding information, which refers to specific information bound to an application of the virtual link, e.g., SSID and VLAN ID, etc.;

(2) security parameters, which provide a collection of security mechanisms expected by the requesting end to apply to the virtual link. For example, if WAPI is supported, the element corresponding to WAPI shall be provided; if the security mechanism is based on 802.11 i, the element RSN IE corresponding to 802.11i shall be filled in;

(3) QoS parameters, used in negotiation of the QoS parameters required by the virtual link.

Step 102: After the MAC layer at STA receives the "Virtual Link Establishment Request" message, it constructs a MAC "Virtual Link Establishment Request" message, and initiates the request message to the AP through the base link. The request message carries virtual link end-point address identification information (i.e., the end-point address of the virtual link requesting end or requested end specified by the user), besides the parameters for negotiation with the opposite end for the virtual link as described in step 101.

The virtual link end-point addresses may be assigned by either of the following two methods, among other things: a) each of the two ends of a virtual link assigns its own end-point addresses; b) the end-point address of one end of a virtual link is assigned by the opposite end.

Therefore, in this embodiment, in the case that the assignation method described in a) is used, the virtual link end-point address identification information in the virtual link establishment request message sent from the STA is the end-point address of the STA; and in the case that the assignation method described in b) is used, the virtual link end-point address identification information in the virtual link establishment request message is the end-point addresses of the STA and the AP if the STA is responsible for assigning the end-point addresses, or the virtual link establishment request message contains no specific end-point address if the STA requests the AP to assign an end-point address for it.

Step 103: After receiving the "Virtual Link Establishment Request" from the MAC layer at STA, the MAC layer at AP parses the message and obtains the negotiation parameters sent from the STA, determines the ultimate binding information, security parameters, and QoS parameters based on local AP information, and determines virtual link end-point address information for both ends of the virtual link with the address information sent from the AP. In this embodiment, if each of the two ends of the virtual link assigns its own end-point addresses (that is, the address information parsed out and obtained by the MAC layer at AP is the address information of the STA), the AP assigns the end-point address for the local end; if the STA is responsible for assigning the end-point addresses (that is, the address information parsed out and obtained by the MAC layer at AP contains the addresses of the STA and the AP), the AP does not assign any address; and if the STA requests the AP to assign an end-point address for it (i.e., the address information parsed out and obtained by the MAC layer at AP is empty), the AP assigns end-point addresses for the STA and the local end.

Step 104: The MAC layer at AP returns a "Virtual Link Establishment Response" to the MAC layer at STA through the base link. The response contains virtual link establishment state information and negotiated virtual link binding information, security parameters, QoS parameters, and virtual link end-point address information. If the negotiation of relevant parameters in step 103 cannot reach agreement, for example, the security mechanism or the QoS mechanism required by the opposite end is not supported, or the capability required for binding information cannot be met, the state information in the "Virtual Link Establishment Response" indicates the failure and the corresponding failure cause value; otherwise the state information is "Virtual Link Successful".

Step 105: The MAC layer at AP sends a virtual link establishment indication to the local user layer; the indication contains the virtual link establishment state, the virtual link end-point address information, the binding information, the security parameters, and the QoS parameters.

Step 106: When receiving the "Virtual Link Establishment Response", the MAC layer at STA sends a virtual link establishment response to the local user layer; the response contains the virtual link establishment state, the virtual link end-point address information, the binding information, the security parameters, and the QoS parameters.

Now, the virtual link between the STA and the AP is established. After then, the two parties may communicate with each other over the virtual link, based on the negotiated parameters. If the virtual link requires corresponding security mechanism, e.g., it requires establishing an 802.11i Robust Security Network Association (RSNA), access authentication and session key negotiation have to be performed on the virtual link according to relevant 802.11i process; after the successful key negotiation, encrypted packets can be transmitted over the virtual link.

Fig.6 shows a virtual link establishment process initiated by an AP for an STA; the steps are similar to the steps described above, and thereby will not be further described here.

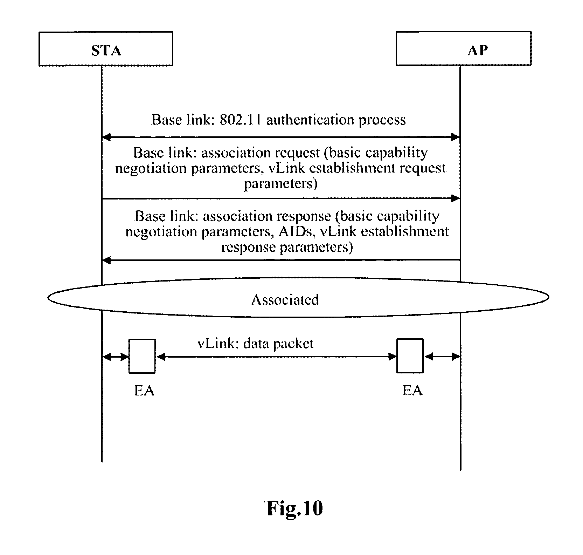

In a second embodiment provided in the present invention, as shown in Fig.10, a virtual link is established between an STA and an AP during the association process after the 802.11 authentication is successful between the two parties. The steps are as follows:

Step 201: The STA initiates an association request to the AP through the base link. The association request contains negotiation parameters and virtual link end-point address information of the STA, besides the basic capability negotiation parameters required for the association.

Step 202: The AP receives the association request, negotiates between the STA obtained by parsing the association request negotiation parameters and its own parameters to obtain negotiated virtual link parameters, and determines virtual link end-point address identifications with obtained virtual link end-point address identification information obtained by parsing the association request.

Step 203: The AP sends an association response to the STA through the base link. The response contains the virtual link parameters negotiated in step 202 and the virtual link end-point address identifications.

Step 204: The STA receives the response, parses out and obtains the negotiated virtual link parameters and the virtual link end-point address identifications.

In the above embodiments, the virtual link is uniquely identified on MAC layer by the corresponding end-point address pair. Therefore, the MAC application layer may use the virtual link on the MAC layer by using directly the corresponding end-point address pair. The user on the MAC layer may also use the virtual link by means of a virtual link number assigned by the local MAC layer without knowing the MAC end-point addresses of the virtual link, and the MAC layer determines the corresponding virtual link end-point addresses according to the virtual link number. In view of that, the present invention provide a third embodiment, with the following steps:

After the MAC layer at AP sends the virtual link establishment response to the MAC layer at STA in step 104 in the first embodiment, the AP assigns a virtual link number, and the virtual link establishment indication sent by the MAC layer at AP to the local user layer contains the virtual link number, besides the content described in step 105; after the STA receives the virtual link establishment response, it also assigns a virtual link number at local end, and the virtual link establishment response sent by the MAC layer at STA to the local user layer contains the virtual link number, besides the content described in step 106. The two virtual link numbers may be different from each other, and are merely used to differentiate different virtual links at local end, respectively.

Therefore, on the MAC layer, each virtual link shall be assigned with a unique virtual link number at the local end. When the MAC user needs to use or manage a virtual link, the message sent to the MAC layer or the primitive interface shall carry the corresponding virtual link number.

In the above embodiments, when the STA or the AP decides to delete a virtual link, it notifies the other party by sending a "Virtual Link Deletion" message through the virtual link, and releases relevant resources allocated to the virtual end locally. Both the STA and the AP have a counter to count the number of the virtual links established based on the base link. When the STA and the AP enter into "Associated" state, the counters are 0. Whenever a virtual link is established successfully, the counters are increased by 1; and whenever a virtual link is deleted, the counters are decreased by 1.

When the STA or the AP receives the "Virtual Link Deletion" message from the opposite end, it releases the relevant resources allocated to the virtual end locally, and the virtual link counter is decreased by 1.

If the STA or the AP cannot communicate normally with the opposite end through the virtual link, it may delete the virtual link automatically at timeout.

As shown in Fig.5 and Fig.6, in "Associated" state, the AP or the STA may initiate the virtual link establishment through the base link. When the AP or the STA receives a "Disassociation" or "Deauthentication" message from the opposite end through the base link, it handles the message if the number of virtual links corresponding to the association is 0; otherwise it discards the message. The state transition diagram is identical to Fig.2.

In the above embodiments, during the virtual link establishment, different virtual links are differentiated with MAC addresses of both ends of a virtual link; that is to say, at least either end of a virtual link must support multiple MAC addresses. An embodiment of the present invention provides a method for establishing virtual link, which doesn't need either end of a virtual link to support multiple MAC addresses; instead, it utilizes the MAC addresses of the base link as the end-point addresses of the virtual link and differentiates the virtual link from other virtual links with the port numbers of the two ends of the virtual link.

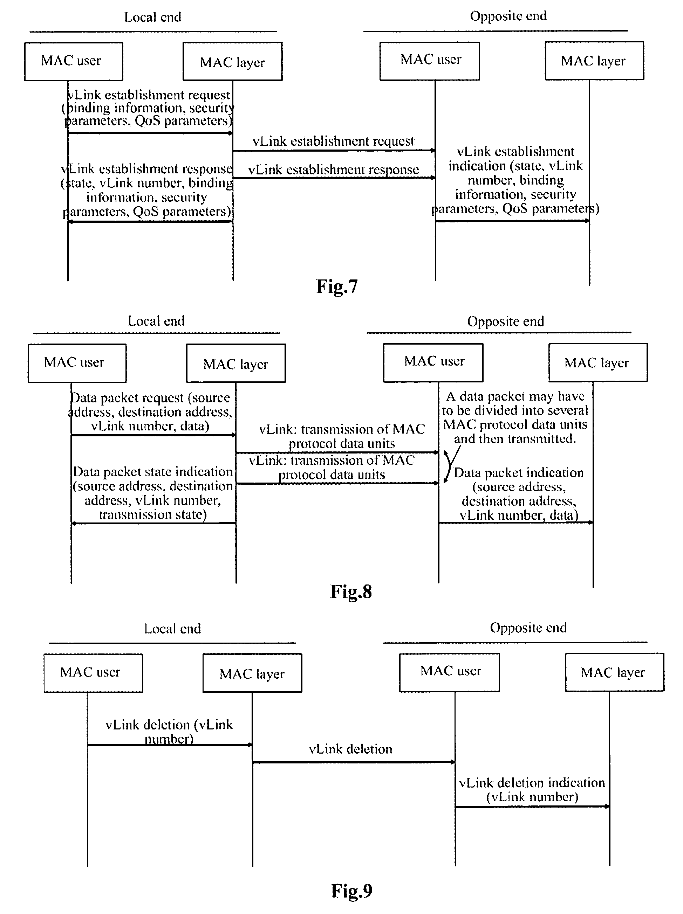

Fig.7 shows a fourth embodiment of the virtual link establishment method described in the present invention. In the case that an STA initiates an establishment request, the specific steps are as follows:

Step 301: The MAC user at STA sends a "Virtual Link Establishment Request" message to the local MAC layer to request establishing a virtual link. The message contains the following parameters:

(1) virtual link binding information, which refers to specific information related to bound to the application of the virtual, e.g., SSID, etc.;

(2) security parameters, which provides a collection of security mechanisms expected to be applied to the virtual link. For example, if WAPI is supported, the element corresponding to WAPI shall be provided; if the security mechanism is based on 802.11 i, the element RSN IE corresponding to 802.11i shall be filled in;

(3) QoS parameters, which provides the QoS parameters required by the virtual link.

Step 302: The MAC layer at STA constructs a MAC "Virtual Link Establishment Request" according to above message parameters. The virtual link establishment request further includes the MAC addresses of the two ends of the base link and the port numbers of the two ends of the virtual link to be established. The message is sent to the opposite end (i.e., the AP) through the base link to negotiate the establishment of the virtual link.

Step 303: After receiving the "Virtual Link Establishment Request", the AP parses the message and obtains the negotiation parameters for the virtual link sent from STA, determines the ultimate binding information, security parameters, and QoS parameters based on local AP information, and determines the identifications of the two ends of the virtual link with the address information sent from STA. In this embodiment, if each of the two ends of the virtual link assigns its own port number (that is, the address information parsed out and obtained by the MAC layer at AP is a port number of the STA), the AP assigns a port number for the local end; if the STA is responsible for assigning the identifications (that is, the address information parsed out and obtained by the MAC layer at AP contains port numbers of the STA and the AP), AP does not assign any identification; and if the STA requests the AP to assign an identification for it (that is, the address information parsed out and obtained by the MAC layer at AP is empty), the AP assigns port numbers for the STA and the local end.

Step 304: The MAC layer at AP returns a "Virtual Link Establishment Response" to the STA through the base link. If the negotiation of relevant parameters in step 303 cannot reach agreement, for example, the security mechanism or the QoS mechanism required by the opposite end is not supported, or the capability required for binding information cannot be met, the state information in the "Virtual Link Establishment Response" indicates the failure and the corresponding failure cause value; otherwise the state information is "Virtual Link Successful", and the response message carries the negotiated binding information, security mechanism, QoS mechanism, and virtual link end-point address information.

Step 305: The MAC layer at AP sends a virtual link establishment indication to the local user layer; the indication contains the virtual link establishment state, the virtual link end-point address information, the binding information, the security parameters, and the QoS parameters.

Step 306: When receiving the "Virtual Link Establishment Response", which acknowledging the virtual link is established successfully, the STA assigns the corresponding virtual link number, and sends a virtual link establishment response to the local user layer; the response contains the virtual link establishment state, the virtual link port number, the binding information, the security parameters, and the QoS parameters. In the above parameters, all parameters other than the virtual link number are copied from the "Virtual Link Establishment Response" received by the MAC layer from the opposite end.

Step 307: After the MAC layer at AP returns the "Virtual Link Establishment Response" to the MAC layer at STA in step 304 (that is, the virtual link is established successfully), the MAC layer at AP creates a virtual link number and sends a virtual link establishment indication to the local MAC user; the parameters carried in the indication message include the virtual link establishment state, the virtual link binding information, the security parameters, the QoS parameters, and the virtual link number, etc.

If the local end has not ascertained a definite opposite end (that is, there is not a base link yet), the MAC layer returns a "Virtual Link Establishment Response" with the state parameter as failure to the MAC layer user.

With the method provided in the embodiment, when a data packet is sent from the sending end to the receiving end, the identification of the sending end and the receiving end includes not only the MAC address of the base link but also a port number; the so-called sending end refers to a port corresponding to a MAC address, and the so-called receiving end refers to a port corresponding to a MAC address; in that way, different virtual links with the same MAC address pair can be differentiated by port number. Different ports may correspond to different security and QoS mechanisms. As for the base link, it is presumed the communication is based on a default port number, or the packet doesn't carry any port number. Another case of the above port number-based mechanism is: one end of the virtual link supports port number, but the other end doesn't support.

Accordingly, another embodiment of the present invention provides a virtual link establishment apparatus, which can establish a virtual link based on a base link; the apparatus includes a negotiation module and an end-point address identification setting module;

The negotiation module is adapted to create and initiate to the requested end a virtual link establishment request message containing virtual link negotiation parameters; to receive and parse a request message from a requesting end, and negotiate between the obtained virtual link negotiation parameters and the local virtual link parameters to obtain negotiated virtual link parameters; and to determine local virtual link end-point address identification and send a virtual link establishment response to the requesting end; the response contains the negotiated virtual link parameters and the virtual link end-point address identifications;

The end-point address identification setting module is adapted to parse the received response to obtain the negotiated virtual link parameters and the virtual link end-point address identifications.

Another embodiment of the present invention provides an STA that includes the virtual link establishment apparatus and an AP that includes the virtual link establishment apparatus.

In addition, another embodiment of the present invention provides a WLAN, including: at least one Basic Service Set (BSS) which is connected to each other via a Distribution System (DS), and each BSS includes at least one STA which is associated with an AP; the STA includes a virtual link establishment apparatus, and the AP also includes a virtual link establishment apparatus; wherein, the virtual link establishment apparatus may establish a virtual link based on a base link; the virtual link establishment apparatus includes a negotiation module and an End-point Address (EA) identification setting module;

The negotiation module is adapted to create and initiate to the requested end a virtual link establishment request containing virtual link negotiation parameters; to parse a request from a requesting end, and negotiate between the obtained virtual link negotiation parameters and the local virtual link parameters to obtain negotiated virtual link parameters; and to determine a local virtual link end-point address identification and send a virtual link establishment response to the requesting end; the response contains the negotiated virtual link parameters and the virtual link end-point address identifications;

The end-point address identification setting module is adapted to parse the received response to obtain the negotiated virtual link parameters and the virtual link end-point address identifications.

In the WLAN according to an embodiment of the present invention, the ports are set in the STA and the AP, respectively. As shown in Fig.4, the virtual link end-point address identifications may be the end-point addresses of the base link, i.e., the MAC addresses of the STA and the AP as well as the port numbers of the STA and the AP. In another case, the virtual link end-point addresses may be port MAC addresses of the STA and the AP.

The parameters include at least virtual link binding information, security parameters, and QoS parameters.

After a virtual link is established successfully, the MAC user may request the MAC layer to transmit data packets through the virtual link. As shown in Fig.8, the data packet transmission steps are as follows:

Step 401: A MAC user sends a "Data Packet Request" message, which contains MAC source address, destination address, virtual link number, and the data packet to be sent, to the MAC layer. After receiving the message, the MAC layer determines the Transmitter Address (TA) and the Receiver Address (RA) according to the virtual link number, and then constructs the address field in MAC data frame header according to the TA, the RA, the source address and the destination address. In addition, for the data packet, the MAC layer performs segmentation and encryption as specified in 802.11 protocol and the security mechanism corresponding to the virtual link to construct one or a series of MAC data packets, and then sends the message(s) to the opposite end; the opposite end decrypts and reconstructs the segmented data packet(s).

Step 402: After the data packet is sent, the MAC layer returns a "Data packet State Indication" to the MAC user, to indicate the transmission state of the corresponding data packet over the virtual link, e.g., whether the data packet is sent successfully, etc.

Step 403: After one end receives a data packet from the other end, the end sends a "Data packet Indication", which carries the source address, destination address, virtual link number, and the received data packet, to the local MAC user.

In this embodiment, as shown in Fig.9, when the MAC user requests to delete a specific virtual link, the MAC user sends a "Virtual Link Deletion" message, which carries the number of the virtual link to be deleted, to the MAC layer. When receiving the message, the MAC layer sends a "Virtual Link Deletion" message to the opposite end through the virtual link corresponding to the specified virtual link number and releases the resources allocated to the virtual link.

When receiving a "Virtual Link Deletion" message from the opposite end through a virtual link, the MAC layer deletes the corresponding virtual link, and sends a "Virtual Link Deletion Indication" carrying the virtual link number to the relevant MAC layer user.

The present invention is described with the preferred embodiments as above. It should be noted that those skilled in the art can make various verifications and alternatives to the embodiments without departing from the protected scope of the present invention.

## Claims

1. A method for establishing a virtual link, comprising:
Step A: initiating a virtual link establishment request to a requested end by a virtual link establishment requesting end through a base link; the request containing virtual link negotiation parameters of the requesting end;
Step B: upon receiving the virtual link establishment request, negotiating by the requested end between the parsed out virtual link negotiation parameters of the requesting end and local virtual link parameters of its own to obtain negotiated virtual link parameters;
Step C: determining the virtual link end-point address identifications by the requested end;
Step D: sending a virtual link establishment response to the requesting end by the requested end through the base link, the response containing the negotiated virtual link parameters obtained and the virtual link end-point address identifications;
Step E: upon receiving the response, parsing the response and obtaining the negotiated virtual link parameters and the virtual link end-point address identifications by the requesting end; and accomplishing the identification of the virtual link by the requesting end and the requested end.

2. The method according to claim 1, wherein the virtual link establishment requesting end is a Station, STA, and the requested end is an Access Point, AP.

3. The method according to claim 1, wherein the requested end determines the virtual link end-point address identifications through the following steps: when the virtual link establishment request initiated by the virtual link establishment requesting end to the requested end through the base link carries the virtual link end-point address identification of the requesting end, the requested end assigns the local virtual link end-point address identification of its own after parsing the request and obtaining the virtual link end-point address identification of the requesting end, and thereby obtains the virtual link end-point address identifications; or
when the virtual link establishment request initiated by the virtual link establishment requesting end to the requested end through the base link carries the virtual link end-point address identifications of the requesting end and the requested end, the requested end takes the parsed out virtual link end-point address identifications of the requesting end and the requested end as the end-point address identifications of the virtual link; or
when the virtual link end-point address identification information carried in the virtual link establishment request message initiated by the virtual link establishment requesting end to the requested end through the base link is empty, the requested end assigns the virtual link end-point address identifications for the requesting end and the requested end, and takes the assigned identifications as the end-point address identifications of the virtual link.

4. The method according to claim 1, wherein the virtual link end-point address identifications comprise the end-point addresses of the requesting end and requested end, or, the virtual link end-point address identifications comprise end-point addresses of the base link and port numbers of the requesting end and requested end.

5. The method according to claim 1, wherein the method further comprises: after the requested end sends the virtual link establishment response, assigning a local virtual link number by the requested end for itself; or, when the requesting end receives the virtual link establishment response sent from the requested end, assigning a local virtual link number by the requesting end for itself.

6. The method according to claim 1, wherein the parameters comprise at least virtual link binding information, security parameters, and Quality of Service, QoS, parameters.

7. The method according to claim 1, wherein there is disposed a counter at each end of the virtual link; when the virtual link is established, the counters are increased by 1, and when the virtual link is deleted, the counters are decreased by 1.

8. The method according to claim 1, wherein the method further comprises: sending virtual link establishment capability information by the two ends waiting for virtual link establishment and determining by the two ends whether a virtual link may be established between them.

9. The method according to claim 8, wherein the AP waiting for virtual link establishment sends the virtual link capability information in a Beacon Frame or a Probe Response Frame; the STA receives the virtual link capability information when it scans the channels and thereby determines whether a virtual link may be established between the AP and itself.

10. The method according to claim 8, wherein the method further comprises: sending the virtual link capability information in an association request or the virtual link establishment request by the STA waiting for virtual link establishment; after the AP receives the virtual link capability information, judging by the AP whether a virtual link may be established between the STA and itself.

11. The method according to claim 8, wherein the virtual link establishment capability information comprises whether the two ends waiting for virtual link establishment support multiple Media Access Control, MAC, addresses; or, the virtual link capability information comprises: whether the two ends support virtual link and virtual link end-point address assignation policy.

12. The method according to claim 1, wherein when either end of the virtual link receives a virtual link deletion request, it sends a virtual link deletion message through the virtual link, and releases relevant local resources; when the other end of the virtual link receives the virtual link deletion message, it releases relevant resources.

13. An apparatus for establishing a virtual link which is adapted to establish the virtual link based on a base link and comprises a negotiation module and an end-point address identification setting module; wherein
the negotiation module is adapted to create and initiate to the requested end a virtual link establishment request containing virtual link negotiation parameters; to receive and parse a request message from a requesting end, and negotiate between the obtained virtual link negotiation parameters and the local virtual link parameters to obtain negotiated virtual link parameters; and to determine a local virtual link end-point address identification and send a virtual link establishment response message which contains the negotiated virtual link parameters and the virtual link end-point address identifications to the requesting end;
the end-point address identification setting module is adapted to parse the received response message to obtain the negotiated virtual link parameters and the virtual link end-point address identifications.

14. A station, STA, comprising an apparatus for establishing a virtual link which is adapted to establish the virtual link based on a base link and comprises a negotiation module and an end-point address identification setting module; wherein
the negotiation module is adapted to create and initiate to the requested end a virtual link establishment request containing virtual link negotiation parameters; to receive and parse a request message from a requesting end, and negotiate between the obtained virtual link negotiation parameters and the local virtual link parameters to obtain negotiated virtual link parameters; and to determine a local virtual link end-point address identification and send a virtual link establishment response which contains the negotiated virtual link parameters and the virtual link end-point address identifications to the requesting end;
the end-point address identification setting module is adapted to parse the received response to obtain the negotiated virtual link parameters and the virtual link end-point address identifications.

15. An Access Point, AP, comprising an apparatus for establishing a virtual link which is adapted to establish the virtual link based on a base link and comprises a negotiation module and an end-point address identification setting module; wherein
the negotiation module is adapted to create and initiate to the requested end a virtual link establishment request containing virtual link negotiation parameters; to receive and parse a request message from a requesting end, and negotiate between the obtained virtual link negotiation parameters and the local virtual link parameters to obtain negotiated virtual link parameters; and to determine a local virtual link end-point address identification and send a virtual link establishment response which contains the negotiated virtual link parameters and the virtual link end-point address identifications to the requesting end;
the end-point address identification setting module is adapted to parse the received response to obtain the negotiated virtual link parameters and the virtual link end-point address identifications.

16. A Wireless LAN, WLAN, comprising at least one Basis Service Set, BSS connected to each other via a Distribution System, DS; wherein each of the at least one BSS comprises at least one Station, STA, associated with an Access Point, AP; and the STA comprises an apparatus for establishing a virtual link, and the AP comprises an apparatus for establishing a virtual link; the apparatus for establishing a virtual link is adapted to establish the virtual link based on a base link, and comprises a negotiation module and an end-point address identification setting module;
the negotiation module is adapted to create and initiate to the requested end a virtual link establishment request containing virtual link negotiation parameters; to parse a request message from a requesting end, and negotiate between the obtained virtual link negotiation parameters and the local virtual link parameters to obtain negotiated virtual link parameters; and to determine a local virtual link end-point address identification and send a virtual link establishment response which contains the negotiated virtual link parameters and the virtual link end-point address identifications to the requesting end;
the end-point address identification setting module is adapted to parse the received response to obtain the negotiated virtual link parameters and the virtual link end-point address identifications.

17. A method for transmitting data through a Wireless LAN, WLAN, comprising:
Step E: sending a data packet request by a MAC user at a data transmission requesting end to the local MAC layer; the request containing a Media Access Control, MAC, source address and a MAC destination address, a virtual link number, and the data packet to be sent;
Step F: after the MAC layer at the data transmission requesting end receives the request, determining a Transmitter Address, TA, and a Receiver Address, RA, by the MAC layer, according to the virtual link number, and then constructing an address field in MAC data frame header by the MAC layer according to the TA, the RA, the source address and the destination address, and sending the data packet by the MAC layer to the MAC layer at the requested end through the virtual link;
Step G: sending, by the MAC layer at the data transmission requested end, a data packet indication carrying the MAC user source address, the MAC user destination address, the virtual link number, and the received data packet to the local MAC user at the requested end.

18. The method according to claim 17, wherein as specified in 802.11 protocol and according to the security mechanism corresponding to the virtual link, the data packet is segmented and encrypted to construct one or a series of MAC protocol data packets, and sent to the data transmission requested end; the requested end decrypts the received one or a series of data packets and reconstructs the one or a series of segmented data packets.

19. The method according to claim 18, further comprising: after sending the data packet, sending a data packet state indication by the MAC layer at the transmission data requesting end to the local MAC user; the indication containing the state, the source address, and the destination address of the data packet sent through the virtual link, as well as the virtual link number.
